# EUROPÄISCHE PATENTSCHRIFT

(11) **EP 1 274 334 B1**
(45) Veröffentlichungstag und Bekanntmachung des Hinweises auf die Patenterteilung: **12.07.2006**
(21) Anmeldenummer: 01917021.6
(22) Anmeldetag: 23.02.2001
(51) Int. Cl.: A47J 43/08

(54) **HAUSHALTSGERÄT**
DOMESTIC APPLIANCE
APPAREIL MENAGER

(30) Priorität: 31.03.2000 DE 10016330
(43) Veröffentlichungstag der Anmeldung: 15.01.2003
(73) Patentinhaber: BSH Bosch und Siemens Hausgeräte GmbH, 81739 München (DE)
(72) Erfinder: ZIBRET, Igor, 3327 Smartno ob Paki (SI); BREZOVNIK, Peter, 3330 Mozirje (SI); PAVLOVIC, Henrik, 3333 Ljubno (SI); PESEC, Jurij, 3301 Petrovce (SI)
(86) Internationale Anmeldenummer: PCT/EP2001/002086
(87) Internationale Veröffentlichungsnummer: WO 2001/074221

(56) Entgegenhaltungen:
- EP-A- 0 570 685
- DE-A- 3 045 088

## Beschreibung

Die Erfindung betrifft ein Haushaltsgerät mit nach dem Oberbegriff des unabhängigen Anspruchs 1.

Solches Haushaltsgerät ist aus DE-A-3045088 bekannt.

Bei einer auf dem Markt befindlichen Küchenmaschine (Siemens Küchenmaschine MK3) ist oberhalb eines über einen Zahnriemen vom Antriebsmotor der Maschine angetriebenen Getrieberades ein Planetengetriebe angeordnet. Am Außenumfang des feststehenden Zaunkranzes dieses Planetengetriebes sind nach radial außen weisende Ansätze angeformt, die zur Befestigung des Zaunkranzes am Gehäuse der Maschine dienen. Diese Ansätze sind starr mit dem Gehäuse verbunden. Dadurch werden die vom Planetengetriebe ausgehenden Geräusche praktisch ungedämpft auf das Gehäuse übertragen.

Der Erfindung liegt die Aufgabe zugrunde, ein Haushaltsgerät gemäß dem Oberbegriff des Anspruches 1 mit einfachen konstruktiven Maßnahmen derart zu verbessern, daß eine Übertragung der von einem Getriebe ausgehenden Geräusche auf das Gehäuse des Haushaltsgerätes zumindest weitestgehend unterbunden ist.

Diese Aufgabe wird gemäß der Erfindung durch die Merkmale des unabhängigen Anspruchs 1 gelöst.

Durch das an der Befestigungsstelle oder den Befestigungsstellen eingefügte schwingungsdämpfende Element erfolgt auf kostengünstige Weise eine erhebliche Dämpfung der von dem befestigten Getriebe ausgehenden und Geräusche verursachenden Schwingungen. Zudem ist eine derartige Geräuschdämmaßnahme im Fertigungsprozeß einfach handhabbar und mit wenigen Handgriffen positionsrichtig an den Befestigungsstellen des Gehäuses anbringbar.

Gemäß einer bevorzugten Ausführungsform des Gegenstandes der Erfindung ist vorgesehen, daß das Getriebe zu seiner Befestigung Tragarme mit Aufnahmen aufweist, an welchen die schwingungsdämpfenden Elemente als Zwischenlage zwischen den zur Befestigung des Getriebes dienenden Gehäuseteilen anordenbar sind.

Durch die das Getriebe tragenden Befestigungsarme im Zusammenwirken mit den zwischen diesen und den Gehäusebefestigungsstellen angeordneten Dämpfungskörpern ist eine besonders gezielte und wirkungsvolle Entkopplung des Getriebes von den Gehäuseteilen erreicht.

Eine besonders fertigungsfreundliche und positionsrichtige Montage der schwingungsdämpfenden Elemente zur Entkopplung des Getriebes von den Gehäuseteilen ergibt sich, wenn nach einer nächsten vorteilhaften Ausgestaltung des Gegenstandes der Erfindung vorgesehen ist, daß die Aufnahmen als zumindest annähernd vertikal angeordnete Haltezapfen ausgebildet sind, an welchen ein rohrähnliches, schwingungsdämpfendes Element form- und/oder kraftschlüssig aufgesteckt ist, wobei die Elemente in an deren Außenkontur angepaßte Aufnahmen an den Gehäuseteilen einfügbar sind.

Besonders intensiv und wirkungsvoll ist die Entkopplung des Getriebes von den Gehäuseteilen, wenn nach einer weiteren bevorzugten Ausführungsform des Gegenstandes der Erfindung vorgesehen ist, daß jeweils ein Haltezapfen beidseits an den Tragarmen vorgesehen ist, auf welchen ein aus Elastomermaterial bestehendes, als schwingungsdämpfendes Element dienendes Rohrteil aufgesteckt ist, daß mit seinem Rohrmantel in an beiden Gehäuseteilen angeordneten Rohrstücken eingefügt ist.

Eine besonders einfache Montage und positionsrichtige Halterung der schwingungsdämpfenden Elemente ergibt sich, wenn nach einer alternativen Ausführungsform des Gegenstandes der Erfindung vorgesehen ist, daß die Aufnahmen als an dem Tragarmen zumindest annähernd vertikal angeordnete Rohrstutzen ausgebildet sind, in welche ein rohrähnlich ausgebildetes schwingungsdämpfendes Element form- und/oder kraftschlüssig eingesteckt ist, wobei die Elemente mit an den Gehäuseteilen angeordneten Haltezapfen zusammenfügbar sind.

Entsprechend einer nächsten bevorzugten Ausführungsform des Gegenstandes der Erfindung ist vorgesehen, daß jeweils ein Rohrstutzen beidseits an den Tragarmen vorgesehen ist, in welchen ein aus Elastomermaterial bestehendes, als schwingungsdämpfendes Element dienendes Rohrteil eingesteckt ist, das mit seiner Rohröffnung in an beiden Gehäuseteilen angeordneten Haltezapfen aufsteckbar ist.

Die in die Rohrstutzen eingesetzten Rohrteile weisen aufgrund ihrer konstruktiven Form eine sehr weiche Charakteristik auf, so daß eine besonders starke Dämpfung der vom Getriebe ausgehenden Schwingung erfolgt.

Durch die an den Gehäuseteilen vorgesehenen Haltezapfen ist die Montage der das Getriebe tragenden Tragarme mit den Gehäuseteilen wesentlich verbessert und somit zugleich mit deutlich verringertem Zeitaufwand durchführbar. Außerdem ist auch bereits durch die Tragarme eine gewisse Schwingungsdämpfung erreicht. Ferner ist die Vormontage der Tragarme mit den schwingungsdämpfenden Elementen besonders einfach und rasch durchführbar.

Die zur Halterung des Getriebes vorgesehenen Tragarme können selbst zur Schwingungsdämpfung beitragen, wenn gemäß einer weiteren bevorzugten Ausführungsform des Gegenstandes der Erfindung vorgesehen ist, daß die Tragarme mit einer U-förmigen Abknickung versehen sind. Durch die U-förmige Abknickung erhalten die Tragarme bereits eine gewisse Elastizität, die sich günstig auf die Schwingungsdämpfung auswirkt.

Eine besonders kostengünstige und wirkungsvolle Geräuschdämpfung für eine Küchenmaschine mit einem elektrischen Antrieb zum Antrieb eines Planetengetriebes und einem Gehäuse, bestehend aus einem Gehäuseoberteil und einem Gehäuseunterteil, wobei das Planetengetriebe einen ortsfesten Zahnkranz besitzt, wird durch die Merkmale des unabhängigen Auspruchs 8 erreicht.

Eine zusätzliche, zur weiteren Verbesserung der Geräuschdämmung dienende Maßnahme besteht darin, daß der Zahnkranz außerdem mittels eines aufgesetzten, aus elastischem Material bestehenden Halterings in einem am Oberteil des Gehäuses ausgebildeten Ringbund gehalten ist.

Die Erfindung ist in der nachfolgenden Beschreibung anhand einer Küchenmaschine mit Planetengetriebe näher erläutert. Es zeigt:

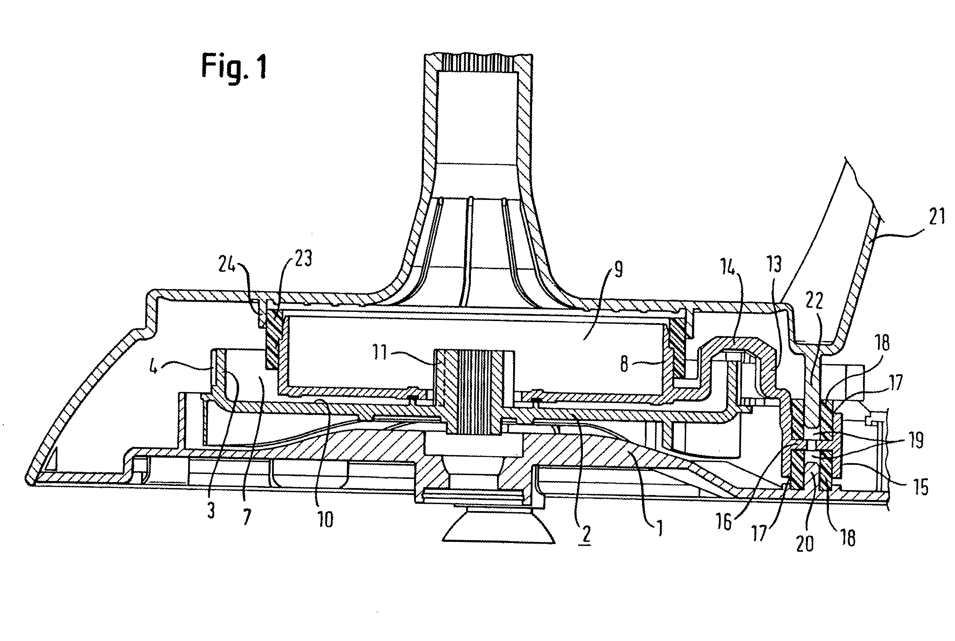

- Fig. 1: die Anordnung des feststehenden Zahnkranzes eines Planetengetriebes an dem unteren Gehäuseteil einer Küchenmaschine im Schnitt,
- Fig. 2: die Anordnung des feststehenden Zahnkranzes eines Planetengetriebes an dem unteren Gehäuseteil einer Küchenmaschine in Draufsicht,

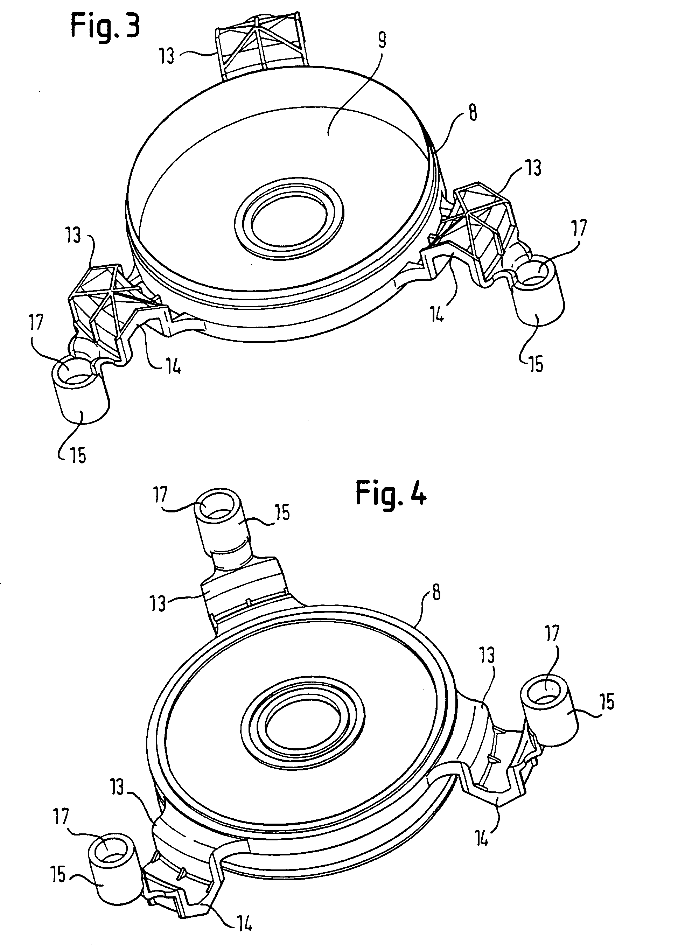

- Fig. 3: in perspektivischer Darstellung eine Draufsicht auf den feststehenden Zahnkranz und
- Fig. 4: in perspektivischer Darstellung eine Unteransicht des feststehenden Zahnkranzes.

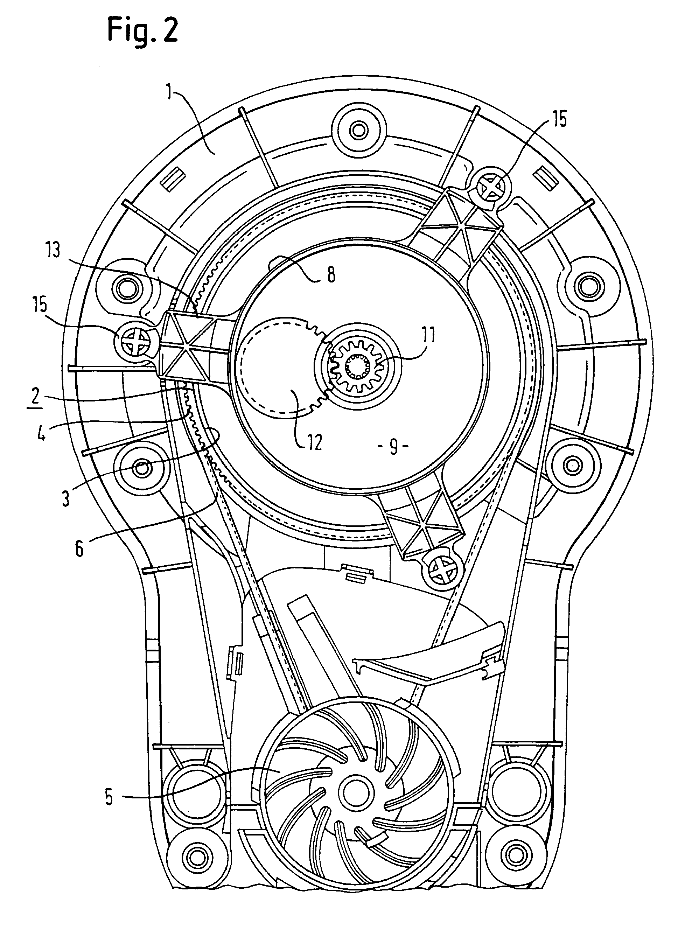

Mit 1 ist der untere Gehäuseteil einer Küchenmaschine bezeichnet. An diesem ist ein topfförmig ausgebildetes Getrieberad 2 drehbar gelagert. An dem Topfmantel 3 des Getrieberades 2 ist eine Außenverzahnung 4 für einen vom Antriebsmotor 5 der Küchenmaschine angetriebenen Zahnriemen 6 vorhanden. Im Topfraum 7 des Getriebesrades 2 ist der feststehende Zahnkranz 8 eines Planetengetriebes angeordnet. Im Innenraum 9 des Zahnkranzes 8 sind mehrere über ein in der Mitte des Topfbodens 10 des Getrieberades 2 angeformtes Sonnenrad 11 angetriebene Planetenräder 12, von denen nur eines in der Fig. 2 dargestellt ist, angeordnet. An der Außenseite des Zahnkranzes 8 sind mit gleichmäßigem Umfangsabstand drei nach radial außen abragende Tragarme 13 angeformt. Die Tragarme 13 weisen eine U-förmige Abknickung 14 auf, mit der sie den Topfmantel 3 des Getrieberades 2 übergreifen. Am freien Ende der Tragarme 13 befinden sich hülsenförmige Befestigungselemente 15, die im Innern einen Zwischenboden 16 aufweisen. Die hülsenförmigen Befestigungselemente 15 bilden somit zwei einander gegenüberliegende Aufnahmen 17, in Form eines Rohrstutzens, in die jeweils ein aus elastischem Material bestehendes Rohrteil 18 eingesetzt ist.

Das in der zu dem unteren Gehäuseteil 1 gerichteten Aufnahme 17 eingesetzte Rohrteil 18 ist mit seiner Rohröffnung 19 auf einen am unteren Gehäuseteil 1 angeformten Zapfen 20 aufgesteckt. Hierdurch wird der Zahnkranz 8 am unteren Gehäuseteil 1 gehalten. Dabei wird durch das elastische Rohrteil 18 eine Berührung von starren Teilen der Tragarme 13, somit also auch des Zahnkranzes 8, mit starren Teilen des Gehäuses 1, also den Zapfen 20, vermieden. Infolge dieser Entkoppelung von starren Teilen ergibt sich durch das elastische Rohrteil 18 eine ausgezeichnete Geräuschdämpfung.

Das obere Gehäuseteil 21 der Küchenmaschine ist mit an ihm angeformten Haltezapfen 22 in die Rohröffnung 19 des in die obenliegende Aufnahme 17 eingesetzten Rohrteiles 18 eingesteckt. Damit ist auch das obere Gehäuseteil 21 schwingungsmäßig von dem Zahnkranz 8 abgekoppelt, so daß auch auf das obere Gehäuseteil 21 Geräusche nur in stark gedämpfter Form übertragen werden können. Damit wird die Geräuschdämpfung insgesamt weiter verbessert. Die Rohrteile 18 besitzen aufgrund ihrer geometrischen Form eine besonders weiche Charakteristik, wodurch sich eine besonders gute Geräuschdämpfung ergibt.

An der Außenseite des Zahnkranzes 8 ist ferner ein aus elastischem Material bestehender Haltering 23 aufgesteckt. Der Haltering 23 greift bei aufgesetztem Gehäuseoberteil 21 in einen an diesem vorgesehenen Ringbund 14 ein. Hlerdurch ergibt sich eine weitere elastische Halterung und insbesondere auch eine gute Zentrierung des Zahnkranzes 8. Der Zahnkranz 8 ist damit sowohl von dem unteren als auch dem oberen Gehäuseteil 1 und 21 schwingungselastisch entkoppelt.

Durch diese vollständige elastische Entkoppelung der Antriebsteile von den Gehäuseteilen 1 und 21 der Küchenmaschine ergibt sich zusätzlich auch eine Abflachung des Anlaufmomentes beim Einschalten des Antriebsmotors 5. Beim Anlauf des Antriebsmotors 5 wirkt der Anfahrstoß zunächst auf die elastischen Elemente, insbesondere auf die Rohrteile 18, wodurch diese zunächst gespannt werden. Erst danach setzt die Drehbewegung der Getriebeteile ein. Eine solche Dämpfung des Anfahrstoßes ist zur Schonung des Antriebsmotors 5 sehr erwünscht.

## Patentansprüche

1. Haushaltsgerät mit einem wenigstens zwei Gehäuseteile (1, 21) aufweisenden Gehäuse und mit einem von einem elektrischen Antriebsaggregat (5) angetriebenen Getriebe, das an wenigstens einem der Gehäuseteile unter Zwischenschaltung schwingungsdämpfender Elemente (18) festgesetzt ist, **dadurch gekennzeichnet, dass** das Getriebe an beiden Gehäuseteilen (1, 21) befestigt ist und das an den Befestigungsstellen (15, 20, 22) die schwingungsdämpfenden Elemente (18) derart eingefügt sind, dass ein direkter Kontakt zwischen dem Getriebe und den Gehäuseteilen (1, 21) verhindert ist und das Getriebe über die schwingungsdämpfenden Elemente (18) in den Gehäuseteilen (1, 21) gehalten ist.

2. Haushaltsgerät nach Anspruch 1, **dadurch gekennzeichnet, daß** das Getriebe zu seiner Befestigung Tragarme (13) mit Aufnahmen (17) aufweist, an welchem die schwingungsdämpfenden Elemente (18) als Zwischenlage zwischen den zur Befestigung des Getriebes dienenden Gehäuseteilen (1, 21) anordenbar sind.

3. Haushaltsgerät nach Anspruch 2, **dadurch gekennzeichnet, daß** die Aufnahmen als zumindest annähernd vertikal angeordnete Haltezapfen ausgebildet sind, an welchen rohrähnliches schwingungsdämpfendes Element form- und/oder kraftschlüssig aufgesteckt ist, wobei die Elemente in an deren Außenkontur angepaßte Aufnahmen an den Gehäuseteilen (1, 21) einfügbar sind.

4. Haushaltsgerät nach Anspruch 3, **dadurch gekennzeichnet, daß** jeweils ein Haltezapfen beidseits an den Tragarmen (4) vorgesehen ist, auf welchem ein aus elastomerem Material bestehendes, als Element dienendes Rohrteil (18) aufgesteckt ist, das mit seinem Rohrmantel in an beiden Gehäuseteilen (1, 21) angeordneten Rohrstücke eingefügt ist.

5. Haushaltsgerät nach Anspruch 2, **dadurch gekennzeichnet, daß** die Aufnahmen (17) als an den Tragarmen (13) zumindest annähernd vertikal angeordnete Rohrstutzen ausgebildet sind, in welche ein rohrähnliches schwingungsdämpfendes Element (18) form- und/oder kraftschlüssig eingesteckt ist, wobei die Elemente (18) an den Gehäuseteilen (1, 21) angeordnete Haltezapfen (20, 22) einfügbar sind.

6. Haushaltsgerät nach Anspruch 5, **dadurch gekennzeichnet, daß** jeweils ein Rohrstutzen (17) beidseits an den Tragarmen (13) vorgesehen ist, in welchem ein aus elastomerem Material bestehendes, als Element dienendes Rohrteil (18) eingesteckt ist, das mit seiner Rohröffnung (19) in an beiden Gehäuseteilen (1, 21) angeordneten Haltezapfen (20, 22) aufsteckbar ist.

7. Haushaltsgerät nach einem der Ansprüche 1 bis 6, **dadurch gekennzeichnet, daß** die Tragarme (13) mit einer U-förmigen Abknickung versehen sind.

8. Küchenmaschine mit einem elektrischen Antrieb (5) zum Antrieb eines Planetengetriebes und einem Gehäuse, bestehend aus einem Gehäuseoberteil (21) und einem Gehäuseunterteil (1), wobei das Planetengetriebe einen ortsfesten Zahnkranz (8) besitzt, der an wenigstens einem der Gehäuseteile unter Zwischenhaltung schwingungsdämpfender Elemente (18) fertgesetst ist, **dadurch gekennzeichnet, dass** der von Tragarmen (13) befestigt ist, wobei die Tragarme nach einem der Ansprüche 2-7 ausgebildet sind.

9. Küchemmaschine nach Anspruch 8 **dadurch gekennzeichnet, daß** der Zahnkranz (8) außerdem mittels eines aufgesetzten, aus elastischem Material bestehenden Halteringes (23) in einem am Gehäuseoberteil (21) ausgebildeten Ringbund (14) gehalten ist.

## Claims

1. Domestic appliance with a housing, which comprises at least two housing parts (1, 21), and with a gear, which is driven by an electric drive unit (5) and which is fixed to at least one of the housing parts with interposition of vibration-damping elements (18), **characterised in that** the gear is fastened to the two housing parts (1, 21) and the vibration-damping elements (18) are inserted at the fastening points (15, 20, 22) in such a manner that a direct contact between the gear and the housing parts (1, 21) is prevented and the gear is held in the housing parts (1, 21) by way of the vibration-damping elements (18).

2. Domestic appliance according to claim 1, **characterised in that** the gear has for fastening thereof carrier arms (13) with mounts (17), at which the vibration-damping elements (18) can be arranged as spacer between the housing parts (1, 21) serving for fastening the gear.

3. Domestic appliance according to claim 2, **characterised in that** the mounts are constructed as approximately vertically arranged holding pins, at which a tube-like vibration-damping element is plugged on in shape-locking and/or force-locking manner, wherein the elements are insertable in mounts, which are matched to the outer contour thereof, at the housing parts (1, 21).

4. Domestic appliance according to claim 3, **characterised in that** in each instance a holding pin is provided at both sides at the carrier arms (4), on which a tube member (18), which consists of elastomeric material and serves as element and which is inserted by its tube circumference in pipe pieces arranged at the two housings (1, 21), is plugged.

5. Domestic appliance according to claim 2, **characterised in that** the mounts (17) are constructed as tubular stub pipes which are arranged at least approximately vertically at the carrier arms (13) and in which a tube-like vibration-damping element (18) is plugged in shape-locking and force-locking manner, wherein the elements (18) are insertable at holding pins (20, 22) arranged at the housing parts (1, 21).

6. Domestic appliance according to claim 5, **characterised in that** in each instance a tube stub pipe (17) is provided at both sides at the carrier arms (13), in which a tube part (18), which consists of elastomeric material and serves as element and which can be plugged by its tube opening (19) into holding pins (20, 22) arranged at both housing parts (1, 21), is inserted.

7. Domestic appliance according to one of claims 1 to 6, **characterised in that** the carrier arms (13) are provided with a U-shaped kink.

8. Food processor with an electric drive (5) for driving a planetary gear and a housing consisting of a housing upper part (21) and a housing lower part (1), wherein the planetary gear has a stationary rim gear (8), which is fixed to at least one of the housing parts with interposition of vibration-damping elements (18), **characterised in that** the rim gear (8) is fastened to both housing parts by way of carrier arms (13), wherein the carrier arms are constructed according to one of claims 2 to 7.

9. Food processor according to claim 8, **characterised in that** the rim gear (8) is additionally held in an annular collar (14), which is formed at the housing upper part (21), by means of a fitted retaining ring (23) which consists of resilient material.

## Revendications

1. Appareil électroménager qui présente un boîtier doté d'au moins deux parties de boîtier (1, 21) et une transmission entraînée par un système électrique d'entraînement (5) et fixée sur au moins l'une des parties du boîtier après avoir intercalé des éléments (18) d'amortissement des vibrations, **caractérisé en ce que** la transmission est fixée sur les deux parties (1, 21) du boîtier et **en ce que** les éléments (18) d'amortissement des vibrations sont insérés aux emplacements de fixation (15, 20, 22) de manière à empêcher un contact direct entre la transmission et les parties (1, 21) du boîtier et **en ce que** la transmission est maintenue dans les parties (1, 21) du boîtier par l'intermédiaire des éléments (18) d'amortissement des vibrations.

2. Appareil électroménager selon la revendication 1, **caractérisé en ce que** pour sa fixation, la transmission présente des bras de support (13) dotés de logements (17) dans lesquels les éléments (18) d'amortissement des vibrations peuvent être placés pour servir de couches intermédiaires entre les parties (1, 21) du boîtier qui servent à fixer la transmission.

3. Appareil électroménager selon la revendication 2, **caractérisé en ce que** les logements sont configurés comme tourillons de maintien disposés au moins sensiblement à la verticale et sur lesquels un élément tubulaire d'amortissement des vibrations est enfiché en correspondance géométrique et/ou mécanique, les éléments pouvant être insérés dans des logements ménagés dans les parties (1, 21) du boîtier et adaptés à leur contour extérieur.

4. Appareil électroménager selon la revendication 3, **caractérisé en ce qu'**un tourillon de maintien est prévu sur les deux côtés des bras de support (4), une pièce tubulaire (18) constituée d'un matériau élastomère et servant d'élément étant enfichée sur ce tourillon de maintien, son enveloppe tubulaire étant insérée dans des pièces tubulaires disposées dans les deux parties (1, 21) du boîtier.

5. Appareil électroménager selon la revendication 2, **caractérisé en ce que** les logements (17) sont configurés comme tubulures disposées sur les bras de support (13) au moins sensiblement à la verticale et dans lesquelles un élément tubulaire (18) d'amortissement des vibrations est enfiché en correspondance géométrique et/ou mécanique, les éléments (18) pouvant être enfichés sur des tourillons de maintien (20, 22) disposés sur les parties (1, 21) du boîtier.

6. Appareil électroménager selon la revendication 5, **caractérisé en ce qu'**une tubulure (17) est prévue sur les deux côtés des bras de support (13), une pièce tubulaire (18) qui sert d'élément et constituée d'un matériau élastomère pouvant y être enfichée et pouvant être enfichée par son ouverture tubulaire (19) sur des tourillons de maintien (20, 22) disposés sur les deux parties (1, 21) du boîtier.

7. Appareil électroménager selon l'une des revendications 1 à 6, **caractérisé en ce que** les bras de support (13) sont dotés d'un coude en forme de U.

8. Machine de cuisine dotée d'un entraînement électrique (5) qui entraîne une transmission planétaire et d'un boîtier constitué d'une partie supérieure de boîtier (21) et d'une partie inférieure de boîtier (1), la transmission planétaire possédant une couronne dentée (8) fixe qui est fixée sur au moins l'une des parties de boîtier après avoir intercalé des éléments (18) d'amortissement des vibrations, **caractérisée en ce que** la couronne dentée (8) est fixée sur les deux parties du boîtier à l'aide de bras de support (13), les bras de support étant configurés selon l'une des revendications 2 à 7.

9. Machine de cuisine selon la revendication 8, **caractérisé en ce que** la couronne dentée (8) est en outre maintenue au moyen d'une bague de maintien (23) constituée d'un matériau élastique et enfichée dans un collet annulaire (14) formé sur la partie supérieure (21) du boîtier.
